# EUROPÄISCHE PATENTSCHRIFT

(11) **EP 1 471 211 B1**
(45) Veröffentlichungstag und Bekanntmachung des Hinweises auf die Patenterteilung: **17.10.2012**
(21) Anmeldenummer: 04008612.6
(22) Anmeldetag: 08.04.2004
(51) Int. Cl.: F01D 5/08, F01D 11/02, F01D 11/00, F02C 7/28

(54) **Dichtung zwischen Leitschaufeln und Rotor einer Hochdruckturbine**
Sealing arrangement between stator blades and rotor of a high pressure turbine
Joint d'étanchéité entre l'anneau de guidage et le rotor d'une turbine à haute pression

(30) Priorität: 25.04.2003 DE 10318852
(43) Veröffentlichungstag der Anmeldung: 27.10.2004
(73) Patentinhaber: Rolls-Royce Deutschland Ltd & Co KG, 15827 Dahlewitz (DE)
(72) Erfinder: Friedl, Winfried-Hagen, 12305 Berlin (DE); Dr. Au, Jörg, 12307 Berlin (DE)
(74) Vertreter: Weber, Joachim

(56) Entgegenhaltungen:
- EP-A1- 0 926 314
- DE-A1- 10 350 626
- GB-A- 2 119 027
- GB-A- 2 251 040
- US-A- 5 498 139
- US-B1- 6 189 891

## Beschreibung

Die Erfindung bezieht sich auf eine Hochdruckturbine eines Gasturbinentriebwerks gemäß den Merkmalen des Oberbegriffs des Hauptanspruchs.

Im Einzelnen betrifft die Erfindung eine Hochdruckturbine eines Gasturbinentriebwerks mit einer Hauptgaskanal-Innendichtung. Im Einzelnen ist eine Turbinenscheibe vorgesehen, die mit Laufschaufeln besetzt ist. Weiterhin umfasst die Hochdruckturbine in üblicher Weise Leitschaufeln, die an einem Leitschaufelkranz befestigt sind. Zwischen der Turbinenscheibe und dem Leitschaufelkranz wird ein Radseitenraum gebildet.

Bei Hochdruckturbinen besteht stets die Notwendigkeit, den Radseitenraum gegenüber dem Hauptgaskanal entsprechend abzudichten, so dass es möglich ist, über den Radseitenraum Kühlluft zur Kühlung der Laufschaufeln zuzuführen. Bei den vorbekannten Ausgestaltungen von Dichtungen ergeben sich verschiedene Überlappungen zwischen den Plattformen der Laufschaufeln und der Leitschaufeln. Dabei sind die Spalten jeweils so groß, dass der Druck des Hauptgaskanals im Wesentlichen dem Radseitenraum aufgeprägt ist. Als nachteilig erweist es sich dabei, dass bei einer einfachen Ausgestaltung der Dichtung der Druck nicht ausreicht, um einen Vorderkantenkühlfilm der Laufschaufel zu speisen. Zur Überwindung dieser Nachteile zeigt der Stand der Technik Lösungen, bei denen der Radseitenraum mittels unterschiedlicher Dichtungen in einzelne Kammern unterteilt wird. Der Massenstrom zur Schaufelkühlung wird dabei üblicherweise aus einer radial inneren Kammer zugeführt, während eine radial äußere Kammer hauptsächlich dazu dient, den Heißgaseinzug aus dem Hauptgaskanal zu verhindern.

Als nachteilig erweist es sich dabei, dass insbesondere die äußere Kammer, welche an einem der heißesten Bereiche der Hochdruckturbine außerhalb des Hauptgaskanals angeordnet ist, nur von einem sehr geringen Massenstrom gespült wird. Da dieser Massenstrom zusätzlich durch eine Dichtung geleitet wird, wird er zusätzlich erwärmt. All dies führt zu einer starken thermischen Belastung der Turbinenscheibe (Scheibenkranz der ersten Stufe der Hochdruckturbine). Dies wiederum resultiert in einer stark eingeschränkten Lebensdauer der Turbinenscheibe.

Die EP-A1-0 926 314 beschreibt eine Hochdruckturbine eines Gasturbinentriebwerks, bei welcher eine Dichtung vorgesehen ist, die an der Schaufelplattform angebracht ist. Eine ähnliche Konstruktion beschreibt die US-A-5 498 139 und US 6189891.

Der Erfindung liegt die Aufgabe zugrunde, eine Hochdruckturbine eines Gasturbinentriebwerks der eingangs genannten Art zu schaffen, welche bei einfachem Aufbau, kostengünstiger Herstellbarkeit und hoher Betriebssicherheit die Nachteile des Standes der Technik vermeidet und eine gute Schaufelkühlung ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass zwischen Leitschaufelplattformen und Laufschaufelplattformen eine effiziente Dichtung ausgebildet ist, bei der die Laufschaufelplattform als Dichtungsläufer verwendet wird. Diese erstreckt sich im Wesentlichen in axialer Richtung und ist radial außenliegend angrenzend an den Hauptgaskanal angeordnet.

Die Dichtung kann dabei als Labyrinthdichtung oder auch als Bürstendichtung ausgestaltet sein. Im ersten Fall können die Laufschaufelplattform die Labyrinthspitzen tragen und die Leitschaufelplattformen das statische Gegenstück. Im Falle einer Ausführung als Bürstendichtung ist das Bürstenelement beispielweise an der Leitschaufelplattform befestigt und kann dann segmentiert ausgestaltet sein.

Durch die erfindungsgemäße Ausgestaltung wird es ermöglicht, den Druck in dem Radseitenraum, insbesondere in dem radial außenliegenden Bereich des Radseitenraumes gegenüber dem Hauptgaskanal zu erhöhen. Hierdurch erfolgt eine verbesserte Zuführung von Kühlluft zu den Laufschaufeln. Dies wiederum führt zu einer verbesserten thermischen Situation, die gesamte Temperatur der Luft im rotierenden System kann damit abgesenkt werden. Dies wiederum hat zur Folge, dass die Temperatur der Turbinenscheibe, insbesondere im Scheibenkranzbereich, erheblich abgesenkt werden kann. Es ergibt sich somit eine geringere thermische Belastung der Turbinenscheibe, wodurch deren Lebensdauer erhöht wird.

Zusätzlich sind Vordralldüsen radial weiter außenliegend angeordnet. Hierdurch wird die Temperaturabsenkung der Kühlluft durch die Vordralldüse verstärkt.

Im Folgenden wird die Erfindung anhand eines Ausführungsbeispiels in Verbindung mit der Zeichnung beschrieben. Dabei zeigt:
- Fig. 1: eine Ausgestaltung nach dem Stand der Technik,
- Fig. 2: eine Teil-Längsschnitt-Ansicht, analog Fig. 1, eines ersten erfindungsgemäßen Ausführungsbeispiels, und
- Fig. 3: eine Teil-Längsschnitt-Ansicht, analog Fig. 1 und 2, eines zweiten erfindungsgemäßen Ausführungsbeispiels.

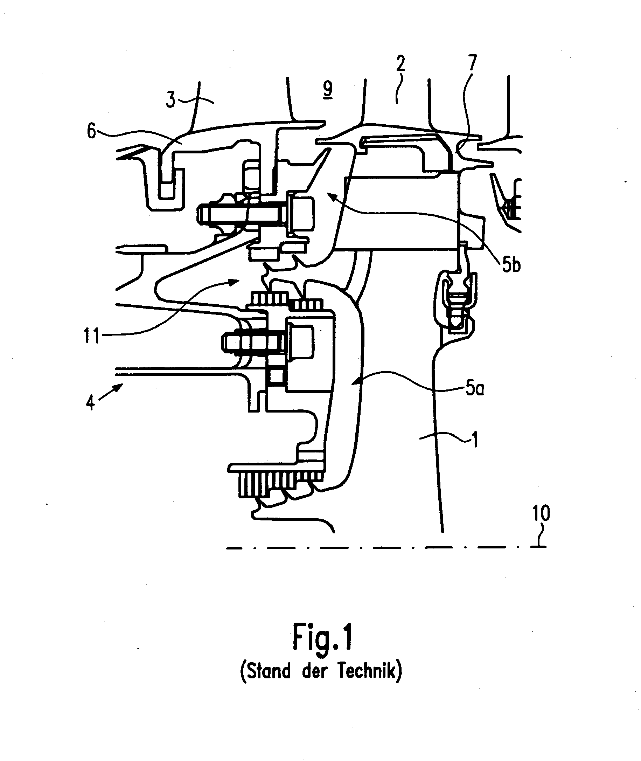

Erfindungsgemäß ist eine Turbinenscheibe 1 vorgesehen, welche mit Laufschaufeln 2 besetzt ist, die jeweils eine Laufschaufelplattform 7 umfassen. Die Turbinenscheibe 1 dreht sich um eine schematisch dargestellte Mittelachse 10. In Strömungsrichtung vor den Laufschaufeln sind Leitschaufeln 3 angeordnet, die auf einem Leitschaufelkranz 4 montiert sind. Die Leitschaufeln 3 umfassen in üblicher Weise Leitschaufelplattformen 6. Wie weiterhin in Fig. 1 dargestellt, ist eine Dichtung 11 vorgesehen, welche eine äußere Kammer 5b von einer inneren Kammer 5a unterteilt. Die beiden Kammern 5a, 5b bilden zusammen einen Radseitenraum 5.

Hinsichtlich der weiteren Konstruktionsdetails kann auf die aus dem Stand der Technik bekannten Ausgestaltungen verwiesen werden.

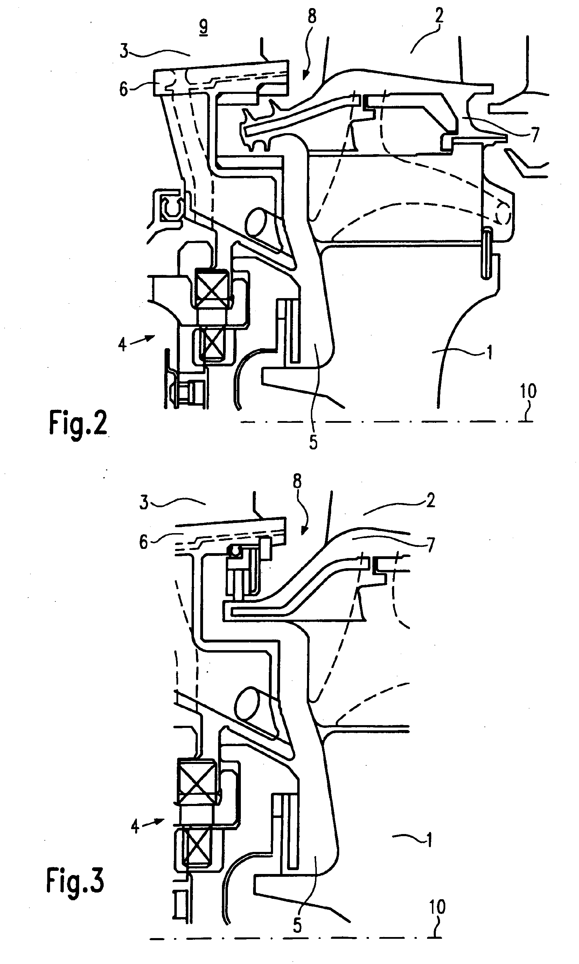

Fig. 2 zeigt eine erste erfindungsgemäße Ausgestaltung, wobei gleiche Teile mit gleichen Bezugsziffern versehen sind.

Aus der Fig. 2 ist insbesondere ersichtlich, dass der Radseitenraum 5 durch eine radial außenliegende Dichtung 8 gegenüber einem Hauptgaskanal 9 abgegrenzt ist. Hierdurch ergibt sich eine einstückige Ausbildung des Radseitenraums 5. Dieser ist nicht durch zusätzliche Dichtungen oder Ähnliches unterteilt, so dass die, Vordralldüse und Eintritt der Kühlluft in die Laufschaufel auf einen Radius angeordnet und Verluste minimiert sind.

Bei dem in Fig. 2 gezeigten ersten Ausführungsbeispiel ist die erfindungsgemäße Dichtung zwischen der Leitschaufelplattform 6 und der Laufschaufelplattform 7 als Labyrinthdichtung ausgebildet. Diese ist im Wesentlichen auf einem gleichbleibenden Radius angeordnet, d.h. die Dichtung verläuft auf einem im Wesentlichen konzentrischen Kreis und ist nicht in mehrere, radial versetzte Dichtungen unterteilt, so wie dies aus dem Stand der Technik bekannt ist.

Die Fig. 3 zeigt ein zweites erfindungsgemäßes Ausführungsbeispiel, welches im Wesentlichen analog zu dem in Fig. 2 gezeigten ersten Ausführungsbeispiel aufgebaut ist. Im Unterschied hierzu ist jedoch die Dichtung 8 als Bürstendichtung ausgebildet. Auch diese liegt auf einem im Wesentlichen konzentrischen Kreis, so dass die Dichtung nicht radial gestuft angeordnet oder in anderer Weise versetzt ist, so wie dies aus dem Stand der Technik bekannt ist. Bei der in Fig. 3 gezeigten Ausgestaltungsform ergeben sich analoge Vorteile wie bei dem Ausführungsbeispiel gemäß Fig. 2.

### Bezugszeichenliste

- 1: Turbinenscheibe
- 2: Laufschaufel
- 3: Leitschaufel
- 4: Leitschaufelkranz
- 5: Radseitenraum
- 5a: Innere Kammer
- 5b: Äußere Kammer
- 6: Leitschaufelplattform
- 7: Laufschaufelplattform
- 8: Dichtung
- 9: Hauptgaskanal
- 10: Mittelachse
- 11: Dichtung

## Patentansprüche

1. Hochdruckturbine eines Gasturbinentriebwerks mit einer mit Laufschaufeln (2) versehenen Turbinenscheibe (1), sowie mit Leitschaufeln (3), wobei zwischen der Turbinenscheibe (1) und einem Leitschaufelkranz (4) ein Radseitenraum (5) ausgebildet ist, wobei in axialer Richtung zwischen Leitschaufelplattformen (6) und Laufschaufelplattformen (7) eine Dichtung (8) ausgebildet ist, welche radial außenliegend an einem Hauptgaskanal (9) angrenzend angeordnet ist, wobei die Laufschaufelplattformen (7) einen Dichtungsläufer bilden, und wobei der Radseitenraum (5) einteilig ausgebildet ist **dadurch gekennzeichnet, dass** der Radseitenraum (5) eine Vordralldüse und einen Eintritt der Kühlluft in die Laufschaufeln (2) auf einem Radius vorsieht.

2. Hochdruckturbine nach Anspruch 1, **dadurch gekennzeichnet, dass** die Dichtung (8) als segmentierte Labyrinthdichtung mit Labyrinthspitzen auf den Schaufelplattformen (6, 7) ausgebildet ist.

3. Hochdruckturbine nach Anspruch 1, **dadurch gekennzeichnet, dass** die Dichtung (8) als Labyrinthdichtung mit Labyrinthspitzen auf der Statorseite und den Laufschaufelplattformen (7) als segmentiertem Dichtungsläufer ausgebildet ist.

4. Hochdruckturbine nach Anspruch 1, **dadurch gekennzeichnet, dass** die Dichtung (8) als Bürstendichtung mit Bürstenelementen auf der Statorseite und den Laufschaufelplattformen (7) als segmentiertem Dichtungsläufer ausgebildet ist.

5. Hochdruckturbine nach Anspruch 1, **dadurch gekennzeichnet, dass** die Dichtung (8) als Bürstendichtung mit einzelnen Bürstenelementen auf den Laufschaufelplattformen (7) ausgebildet ist.

## Claims

1. High-pressure turbine of a gas-turbine engine provided with a turbine disk (1) carrying rotor blades (2) and with stator vanes (3), with a lateral wheel cavity (5) being formed between the turbine disk (1) and a stator blade ring (4), with a seal (8) being provided in the axial direction between stator vane platforms (6) and rotor blade platforms (7) which is arranged radially outward adjacent to a main gas duct (9), with the rotor blade platforms (7) forming a sealing wheel, and with the lateral wheel cavity (5) being of a single piece, **characterized in that** the lateral wheel cavity (5) provides a preswirl nozzle and a cooling-air entry into the rotor blades (2) on a radius.

2. High-pressure turbine in accordance with Claim 1, **characterized in that** the seal (8) is designed as segmented labyrinth seal with labyrinth tips on the blade platforms (6, 7).

3. High-pressure turbine in accordance with Claim 1, **characterized in that** the seal (8) is designed as labyrinth seal, with labyrinth tips on the stator side and with the rotor blade platforms (7) forming a segmented sealing wheel.

4. High-pressure turbine in accordance with Claim 1, **characterized in that** the seal (8) is of the brush type, with brush elements on the stator side and with the rotor blade platforms (7) forming a segmented sealing wheel.

5. High-pressure turbine in accordance with Claim 1, **characterized in that** the seal (8) is of the brush type, with individual brush elements on the rotor blade platforms (7).

## Revendications

1. Turbine haute pression d'un moteur à turbine à gaz, pourvue d'un disque de turbine (1) muni d'aubes mobiles (2), ainsi que des aubes fixes (3), sachant qu'entre le disque de turbine (1) et une couronne d'aubes fixes (4) est formée une cavité latérale de roue (5), que dans le sens axial entre des plateformes d'aubes fixes (6) et des plateformes d'aubes mobiles (7) est formé un joint (8) qui est disposé radialement à l'extérieur en jouxtant un canal de gaz principal (9), que les plateformes d'aubes mobiles (7) forment une roue d'étanchéité, et que la cavité latérale de roue (5) est formée d'une seule pièce, **caractérisée en ce que** la cavité latérale de roue (5) prévoit sur un rayon une tuyère de tourbillonnement préliminaire et une entrée d'air de refroidissement dans les aubes mobiles (2).

2. Turbine haute pression selon la revendication n° 1, **caractérisée en ce que** le joint (8) est formé sur les plateformes d'aubes (6, 7) en tant que garniture en labyrinthe segmentée avec pointes de labyrinthe.

3. Turbine haute pression selon la revendication n° 1, **caractérisée en ce que** le joint (8) est formé en tant que garniture en labyrinthe avec pointes de labyrinthe du côté stator et que les plateformes d'aubes mobiles (7) sont formées en tant que roue d'étanchéité segmentée.

4. Turbine haute pression selon la revendication n° 1, **caractérisée en ce que** le joint (8) est formé en tant que joint brosse avec éléments de brosse du côté stator et que les plateformes d'aubes mobiles (7) sont formées en tant que roue d'étanchéité segmentée.

5. Turbine haute pression selon la revendication n° 1, **caractérisée en ce que** le que le joint (8) est formé en tant que joint brosse avec éléments de brosse individuels sur les plateformes d'aubes mobiles (7).
